# EUROPEAN PATENT APPLICATION

(11) **EP 3 808 490 A1**
(43) Date of publication of application: **21.04.2021**
(21) Application number: 19020579.9
(22) Date of filing: 16.10.2019
(51) Int. Cl.: B23K 9/167, B23K 10/02, B23K 35/38

(54) **LOW EMISSION SHIELDING GAS FOR STAINLESS STEEL WELDING**

(71) Applicant: Linde GmbH, 82049 Pullach (DE)
(72) Inventor: Siewert, Erwan, 85283 Niederlauterbach (DE); Hussary, Nakhleh A., 85737 Ismaning (DE); Pfreuntner, Tobias, 85716 Unterschleißheim (DE)
(74) Representative: Gellner, Bernd

(57) **Abstract**

The present invention relates to a shielding gas (G) for welding, comprising:
Argon, hydrogen, and helium, wherein the hydrogen content is in the range from 4 vol.-% to 5 vol.-%, and wherein the helium content is in the range from 30 vol.-% to 40 vol.-%.

## Description

The present invention relates to a shielding gas, a use of the shielding gas, and a method for welding.

Mostly pure argon (Ar) is used for tungsten inert gas welding (TIG) of stainless steel. Hydrogen is sometimes added to the argon to increase the welding speed.

Manual welders are limited in welding speed due to the manual feeding of the filler wire. Therefore, the maximum amount of hydrogen is usually limited to about 2 vol.-% in manual welding.

In TIG welding the critical type of emissions are the gaseous emissions. In particular NO, NO₂ and ozone are created in TIG welding. Furthermore, the UV radiation is a critical emission type.

As TIG welding requires very high skills the equipment should be as light weight as possible. Therefore, welder often use the smallest torch possible and do not use fully ventilated helmets. Consequently, the only chance to reduce the exposure to gaseous emission is the use of extraction systems. However, these systems only extract the emission in its active range and are not consequently repositioned when the welding position is changed. Furthermore, the ozone that is generated by the UV radiation is produced also in a larger distance to the arc and consequently the ozone is not extracted by the extraction system.

The best way to reduce the exposure to gaseous emissions is to minimize it at the source, as gaseous emission can be enriched in a room and have partly long decay times and pose a risk also to non-welders that operate in the same building.

A second dangerous type of emission is the light emitted from the arc. The strong UV radiation leads to arc eye and sunburn. Furthermore, the UV radiation causes generation of the ozone and is also produced in a greater distance from the arc. Furthermore, the UV radiation is not the only dangerous radiation range, all radiation emissions generated upon welding can lead to irritations of the eyes and skin burning.

Therefore, based on the above, the problem underlying the present invention is to provide an improved shielding gas.

This problem is solved by a shielding gas having the features of claim 1.

Preferred embodiments of this shielding gas are stated in the corresponding sub claims and are described below.

According to claim 1, a shielding gas for welding, particularly of tungsten inert gas welding (TIG), is disclosed, comprising Argon, hydrogen, and helium, wherein the hydrogen content is in the range from 4 vol.-% to 5 vol.-%, and wherein the helium content is in the range from 30 vol.-% to 40 vol.-%.

Particularly, He and H₂ are used in the welding process to shift the radiation to larger wavelengths in order to reduce the UV radiation. The gas composition allows to further reduce the emissions as helium and hydrogen lead to an improved heat conduction as well as a higher arc power allowing to reduce the current drastically. Using a (e.g. lower) welding current adapted to the shielding gas to create the same penetration of the weld pool advantageously leads to ultra-low ozone, UV, NO and NO₂ emission when the welding current is e.g. dropped by around 30 % to 40%.

According to an embodiment, the sum of the hydrogen content, the helium content and of the argon content of the shielding gas amounts to 100 vol.-%.

According to a further aspect of the present invention, the shielding gas according to the present invention is used for gas tungsten arc welding (TIG) or plasma arc welding (PAW). In PAW the shielding gas can also be used as plasma and/or focus gas.

In plasma arc welding, the electric arc is formed between an electrode and the at least one workpiece. The difference to TIG is that in PAW the electrode is positioned within a plasma gas nozzle of the torch and therefore the arc is constricted resulting in a higher energy density.

According to yet another aspect of the present invention, a method for welding is disclosed (particularly a method for tungsten inert gas welding), comprising the steps of:
- Providing a shielding gas according to the present invention,
- Generating an arc with a welding torch and forming a weld pool on a surface of at least one workpiece, and
- shielding at least a portion of the weld pool with the shielding gas.

Particularly, two workpieces can be connected to one another by the method according to the present invention by forming a weld pool on adjacent surfaces of the workpieces to form a weld seam connecting both workpieces.

Particularly, according to an embodiment, for generating the weld pool, a welding current is used that is in the range from (15^{∗}d) A to (25^{∗}d) A, wherein d is a thickness of the at least one workpiece in units of millimeters normal to said surface of the workpiece. As an example, in case the workpiece comprises a thickness d=1mm, a welding current in the range from 15 A to 25 A is preferably used.

Thus, particularly, the welding current used to generate the weld pool is reduced compared to a welding current typically used when pure Argon is used as shielding gas or a mixture of Argon and Hydrogen. Preferably, according to the present invention, the welding current is reduced until a penetration is achieved that is compared to the penetration achieved with the standard shielding gas (e.g. Argon or a mixture of Argon and Hydrogen).

Preferably, the complete weld pool is shielded by means of the shielding gas. Shielding the weld pool is achieved by discharging the shielding gas onto the weld pool on surface of the workpiece upon welding (e.g. through a nozzle in the welding torch). Further, according to an embodiment of the method according to the present invention, the welding torch comprises an electrode for generating said arc, wherein the electrode comprises tungsten, particularly doped tungsten.

Furthermore, according to an embodiment of the method, the electrode comprises a diameter in the range from 1 mm to 3 mm. Particularly, this means that the electrode comprises an elongated shape and extends along a longitudinal axis, wherein the diameter extends perpendicular to the longitudinal axis.

Furthermore, according to an embodiment of the method, the electrode comprises a tip forming a cone, wherein said arc extends from the tip to the at least one workpiece upon forming the weld pool, wherein the half apex angle of the cone lies in the range from 5° to 10° if the welding current is lower than 20A.

Furthermore, according to an embodiment of the method, a welding current is used to generate the weld pool that is in the range from 10A to 75A.

Further, according to a preferred embodiment of the present invention, the at least one workpiece is formed out of stainless steel. The thickness of the at least one workpiece, particularly sheet, is preferably in the range from 0.1 mm to 4 mm if it is welded in one single layer.

Particularly, in the framework of the present invention stainless steel is understood to be an alloy comprising at least Fe, C, and Cr, wherein stainless steel has a minimum of 10.5% chromium content by mass and a maximum of 1.2% carbon by mass.

Examples for such alloys are X2CrTiNb18, X3CrTi17, X2CrTi12, X6CrTi12, X6CrMoNb17-1, X10CrNi18-8, X12CrNi17-7, X2CrNiN18-7, X2CrNi18-9, X2CrNi19-11, X2CrNiN18-10, X5CrNi18-10, X6CrNi18-11, X4CrNi18-12, X5CrNi18-12, X6CrNiTi18-10, X10CrNiTi18-10, X12CrNiTi18-9, X2CrNiMo17-12-2, X5CrNiMo17-12-2, X2CrNiMoN17-11-2, X2CrNiMo17-12-3, X2CrNiMo18-14-3, X3CrNiMo17-13-3, X6CrNiMoTi17-12-2, X2CrNiMoN17-13-3, X2CrNiMo18-15-4, X1NiCrMoCu25-20-5, X1CrNiMoCuN20-18-7, X2CrNiMoN22-5-3.

Furthermore, according to an embodiment of the method according to the present invention, the welding torch is manually moved to form a weld seam.

Alternatively, the welding torch may also be automatically moved (e.g. by a welding robot).

In the following, embodiments, further features, and advantages of the present invention shall be described with reference to the Figure, wherein
- Fig. 1: shows a schematical illustration of an embodiment of the method according to the present invention; and
- Fig. 2: shows a cross-sectional view of a cone-shaped tip of the electrode of the torch shown in Fig. 1.

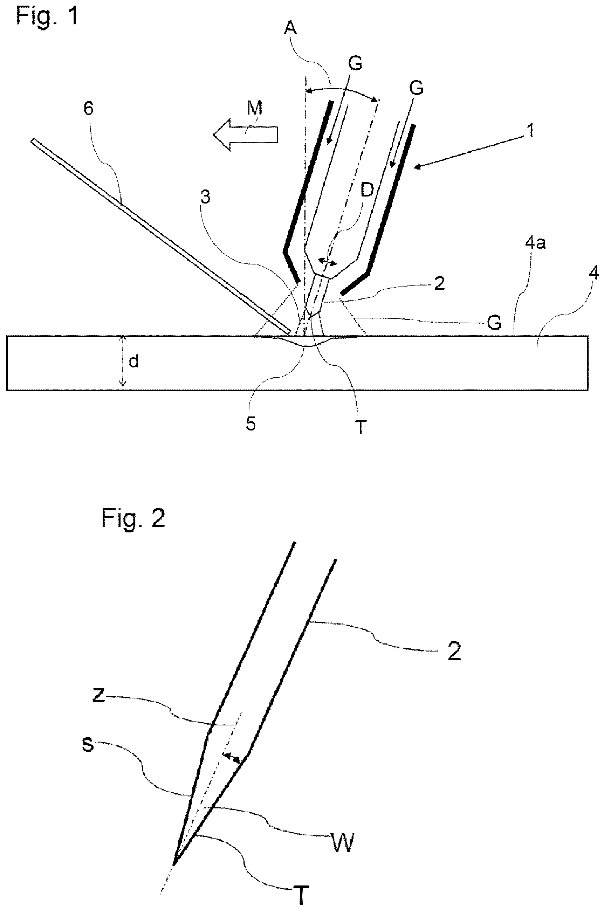

Figure 1 shows an embodiment of a welding method according to the present invention. Particularly, the welding method relates to tungsten inert gas welding (TIG), wherein an arc 3 is created between an electrode 2 of a welding torch 1 and at least one workpiece 4, wherein the electrode comprises tungsten, and wherein a shielding gas G is discharged onto the workpiece to protect the weld pool 5 / weld seam 5 formed on the surface of the at least one workpiece 4.

Preferably, the shielding gas G comprises argon, hydrogen, and helium, wherein the hydrogen content is in the range from 4 vol.-% to 5 vol.-%, and wherein the helium content is in the range from 30 vol.-% to 40 vol.-%. Preferably, the sum of the hydrogen content, the helium content and of the argon content of the shielding gas G amounts to 100 vol.-%.

Preferably, the electrode 2 comprises a diameter D in the range from 1 mm to 3 mm.

Furthermore, a welding current is preferably used to generate the weld pool 5 / weld seam 5 that is in the range from 10 A to 75 A. Particularly, the welding current is selected depending on a thickness d of the at least one workpiece 4. Preferably, a current I is selected that lies within the range from I=(15^{∗}d) A to I=(25^{∗}d) A, wherein d is the thickness of the at least one workpiece normal to its surface 4a in millimeters [mm].

As further shown in Fig. 2, the electrode 2 comprises a tip T forming a cone such that upon welding the arc 3 extends from the tip / cone T to the at least one workpiece 4. The tip T defines an angle W between a center axis z of the electrode 2 and a generatrix s of the cone T. The generatrix s is a linear line s on the surface of the cone which extends from the apex of the cone T to the base of the cone.

This angle W is also denoted as half apex angle W and preferably lies in the range from 5° to 10° in case the welding current used for welding is lower than 20A.

Furthermore, the at least one workpiece (or two workpieces to be joint by a weld seam 5) are formed out of stainless steel (see also above). Upon welding, a suitable filler wire 6 may be added to the weld pool 5.

Furthermore, the method according to the present invention is particularly suited for manual welding, wherein the welding torch 1 can for instance be moved in the direction indicated by an arrow in Fig. 1 to form a weld seam. The torch 1 can be moved at an angle A with respect to the vertical.

Particularly, the present invention allows to achieve ultra-low gaseous emissions as well as ultra-Low UV radiation compared to other shielding gases.

The shielding gas further allows a reduction of the welding current which enables the use of: smaller torches, smaller electrodes, and smaller welding machines which is beneficial to manual welding processes. The present invention therewith allows to produce weld seams showing less distortion with higher efficiency and lower power requirements. Finally, the welding process becomes more convenient due to less heat, radiation and smaller electrode and torch.

## Claims

1. A shielding gas (G) for welding, comprising:
Argon, hydrogen, and helium, wherein the hydrogen content is in the range from 4 vol.-% to 5 vol.-%, and wherein the helium content is in the range from 30 vol.-% to 40 vol.-%.

2. The shielding gas according to claim 1, **wherein** the sum of the hydrogen content, the helium content and of the argon content of the shielding gas (G) amounts to 100 vol.-%.

3. A use of a shielding gas according to claim 1 or 2 for gas tungsten arc welding or plasma arc welding.

4. A method for welding, comprising the steps of:
- Providing a shielding gas (G) according to claim 1 or 2,
- Generating an arc (3) with a welding torch (1) and forming a weld pool (5) on a surface (4a) of at least one workpiece (4), and
- shielding at least a portion of the weld pool (5) with the shielding gas (G).

5. The method according to claim 4, **wherein** a welding current is used to generate the weld pool (5) that is in the range from (15^{∗}d) A to (25^{∗}d) A, wherein d is a thickness of the at least one workpiece (4) in units of millimeters normal to said surface (4a).

6. The method according to claim 4 or 5, **wherein** the welding torch (1) comprises an electrode (2) for generating said arc (3), wherein the electrode (2) comprises tungsten, particularly doped tungsten.

7. The method according to claim 6, **wherein** the electrode (2) comprises a diameter (D) in the range from 1 mm to 3 mm.

8. The method according to claim 6 or 7, **wherein** the electrode (2) comprises a tip (T) forming a cone, wherein the half apex angle (W) of the cone (T) lies in the range from 10° to 15° if the welding current is lower than 20A.

9. The method according to one of the claims 4 to 8, **wherein** the workpiece (4) is formed out of stainless steel.

10. The method according to one of the claims 4 to 9, **wherein** the welding torch (1) is manually moved to form a weld seam.

11. The method according to one of the claims 4 to 9, **wherein** the welding torch (1) is automatically moved.
